# EUROPEAN PATENT APPLICATION

(11) **EP 1 617 632 A1**
(43) Date of publication of application: **18.01.2006**
(21) Application number: 04725825.6
(22) Date of filing: 05.04.2004
(51) Int. Cl.: H04M 1/03, H04R 1/00

(54) **TELEPHONE TRANSMITTER/RECEIVER**

(30) Priority: 03.04.2003 JP 2003100552
(71) Applicant: Temco Japan Co., Ltd., Tokyo 168-0062 (JP); Kobayashi, Kazuji, Suginami-ku Tokyo 168-0062 (JP)
(72) Inventor: FUKUDA, Mikio, Tokyo 168-0062 (JP); TAKEDA, Takeshi, Tokyo 104-0031 (JP)
(74) Representative: Bentz, Jean-Paul
(86) International application number: PCT/JP2004/004906
(87) International publication number: WO 2004/091180

(57) **Abstract**

There is provided a telephone transmitter/receiver which can be easily applied to an existing telephone device for performing bone conduction communication at a low cost and which can be used with the same sense as a conventional telephone device. The telephone transmitter/receiver is **characterized by** comprising: a casing having a speech sending opening and a speech receiving opening; a microphone arranged in the speech sending opening; a bone conduction loudspeaker arranged in the speech receiving opening; an amplifier arranged in the casing and connected to the bone conduction loudspeaker; a connection cord having a telephone connector which can be inserted into the jack of a telephone main body and connected to both the microphone and the bone conduction loudspeaker; and, a power supply connection cord connecting the amplifier to an AC adapter.

## Description

### Technical Field:

The present invention relates to a telephone transmitter/receiver, and more particularly to a telephone transmitter/receiver, which is connected with a telephone main body for performing bone conduction communication by using a bone conduction loudspeaker, wherein the telephone transmitter/receiver is previously mounted on a new set of telephone device or applied to an already-existing set of telephone device.

### Background Art:

In the great majority of telephone transmitters/receivers: electro dynamic loudspeakers or ceramics loudspeakers are used as their loudspeakers; and, electret microphones are used as their microphones. As for these telephone transmitters/receivers, when they are replaced with those using the bone conduction loudspeakers so as to make it possible for a person, who has difficulty in hearing, to catch voice sound, or for a person normal in hearing to facilitate the catching of voice sound in a high-noise environment, it is impossible for the user to obtain a sufficient volume of sound since the bone conduction loudspeakers are poor in output.

As a result, in order to enjoy bone conduction communication by replacing only the telephone transmitter/receiver, it is necessary to use an amplifier for driving the bone conduction loudspeaker together with a power source for energizing this amplifier. However, it is not possible for the telephone main body to supply a sufficient amount of power to the amplifier. So, it is one of possible options to use an amplifier of a built-in battery type. In this case, however, the transmitter/receiver with such amplifier is too heavy in weight, and therefore not suitable for use in bone conduction communication.

### DISCLOSURE OF THE INVENTION

In the case where the bone conduction loudspeaker is incorporated in the telephone transmitter/receiver, the above-mentioned problem comes up. Due to this, it is an object of the present invention to provide a telephone transmitter/receiver, which is free from the above problem, and therefore capable of being used with the same sense as the conventional telephone device in enjoying the bone conduction communication at a low cost, and is further capable of being applied to an already-existing telephone device.

The above object of the present invention is accomplished by providing: A telephone transmitter/receiver, which comprises: a casing having a speech sending opening and a speech receiving opening; a microphone arranged in the speech sending opening; a bone conduction loudspeaker arranged in the speech receiving opening; an amplifier arranged in the casing and connected to the bone conduction loudspeaker; a connection cord having a telephone connector which can be inserted into a jack of a telephone main body and connected to both the microphone and the bone conduction loudspeaker; and, a power supply connection cord connecting the amplifier to an AC adapter.

The power supply connection cord is provided with a DC jack, which is capable of receiving a DC plug of the AC adapter therein in an insertion manner. Alternatively, the power supply connection cord is provided with the AC adapter in its front end.

It is possible for the casing to carry an on-off switch of a power source for energizing/de-energizing the amplifier. In the case where the casing carries the on-off switch: a turn-on operation of the on-off switch is capable of being carried out by taking up the telephone transmitter/receiver from the telephone main body; and, a turn-off operation of the on-off switch is capable of being carried out by putting down the telephone transmitter/receiver onto the telephone main body.

It is possible to arrange the bone conduction loudspeaker in the speech sending opening in a manner such that the bone conduction loudspeaker is exposed to the outside. In the case where the bone conduction loudspeaker is exposed to the outside, it is possible to arrange the bone conduction loudspeaker in the speech sending opening in a manner such that the bone conduction loudspeaker is capable of performing a spherical motion in use. Further, it is also possible to arrange the bone conduction loudspeaker in the speech sending opening in a manner such that the bone conduction loudspeaker is capable of moving in a longitudinal direction of the casing.

### BRIEF DESCRIPTION OF THE DRAWING

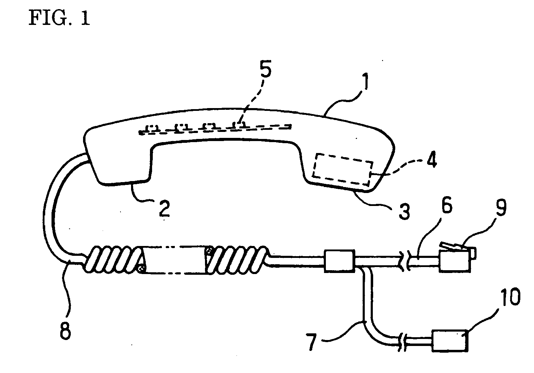

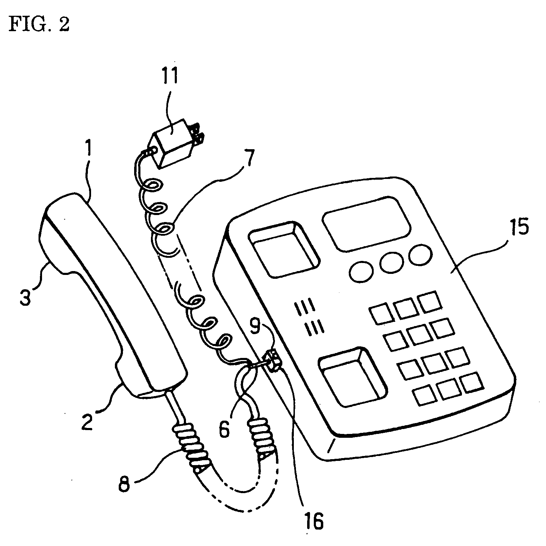

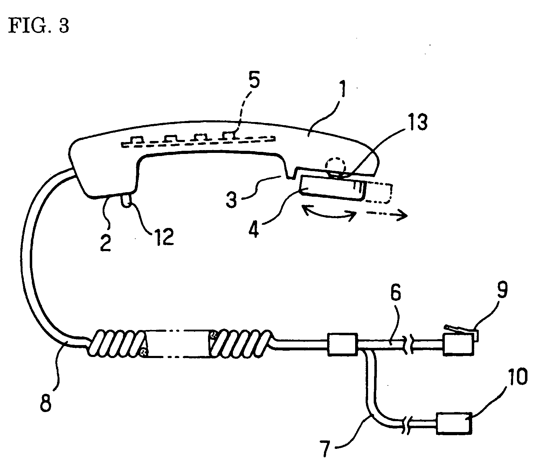

Fig. 1 is a side view of an embodiment of the telephone transmitter/receiver according to the present invention. Fig. 2 is a perspective view of the telephone transmitter/receiver in another embodiment of the present invention. Fig. 3 is a side view of the telephone transmitter/receiver in still another embodiment of the present invention.

### BEST MODE FOR CARRYING OUT THE INVENTION

Hereinbelow, with reference to the accompanying drawings, preferred embodiments of the present invention will be described. Fig. 1 shows an embodiment of a telephone transmitter/receiver of the present invention. A casing 1 of the telephone transmitter/receiver of the present invention assumes a form provided with both a speech sending opening 2 and a speech receiving opening 3.

Arranged in the speech sending opening 2 is a microphone (not shown). Arranged in the speech receiving opening 3 is a bone conduction loudspeaker 4. This loudspeaker is connected with an amplifier 5, which is incorporated in the casing 1.

A connection cord 6, which has the same construction as that of a conventional connection cord, is connected with both the microphone and the bone conduction loudspeaker 4. Connected with the amplifier 5 is another connection cord7. These two cords 6, 7 have their portions extending outside the casing 1 twisted together so as to be formed into a single line. Alternatively, it is also possible to insert these cords 6, 7 into a single piece of tube 8. The tube 8 is a preferable one of possible options. The connection cords 6, 7 have a pair of their inner portions in the casing 1 and another pair of their outer portions extending outside the casing 1 connected with each other through a modular jack. This modular jack is mounted on a bottom surface of the casing 1.

A telephone connector 9, which is capable of being connected with a jack 16 (see Fig. 2) of a telephone main body 15 in an insertion manner, is connected with each of the microphone and a rear end of the connection cord 6 in the side of the bone conduction loudspeaker 4. On the other hand, the other connection cord 7, that is, power supply connection cord 7 has its rear end connected with a DC jack 10, which is capable of receiving therein a DC plug of an AC adapter (not shown) in an insertion manner (see Fig. 1).

In this case, in each of the side of the telephone connector 9 of the connection cord 6 and the side of DC jack 10 of the power supply connection cord 7, each of the connection cords 6, 7 is exposed to the outside from the tube 8 by an appropriate length of each cord to facilitate both the insertion operation of the jack 16 provided in an appropriate portion of the telephone main body 15 and the insertion operation of the DC plug of the AC adapter.

In the embodiment shown in Fig. 2, the power supply connection cord 7 is extended in length and has its front end directly connected with an AC adapter 11.

Before using the telephone transmitter/receiver of the present invention, it is necessary to insert the telephone connector 9 into the jack 16 of the telephone main body 15 and also necessary to insert the DC plug of the AC adapter into the DC jack 10. As for the power supply for energizing the amplifier 5, the power supply is available by using the AC adapter. In the case where the AC adapter 11 is directly connected with the power supply connection cord 7, the AC adapter 11 is inserted into a domestic power supply receptacle before using. In use, the speech receiving opening 3 is brought into press-contact with the user's ear or its vicinities, while the remaining portions of the telephone transmitter/receiver are used in the same manner as those of the ordinary telephone transmitter/receiver. In other words, in use, the user is capable of holding the telephone transmitter/receiver by his or her own hand to bring the speech receiving opening 3 into press-contact with the user's ear or its vicinities to enjoy bone conduction communication.

Further, as an additional function, it is possible to mount an on-off switch in the casing 1, where the on-off switch is used to turn on and off a power supply for energizing the amplifier (see Fig. 3) . As the on-off switch 12, it is possible to provide an on-off switchofatype, whichis, for example, to perform an on-off operation. In these operations: a turn-on operation is realized when the telephone transmitter/receiver is taken up by the user from the telephone main body 15 in a condition in which the switch permits its projection to extend upward or out of the casing 1 under the influence of a spring so that the amplifier is energized by its power supply; and, a turn-off operation is realizedwhen the telephone transmitter/receiver is put down onto the telephone main body 15 to depress the projection of the switch so as to be embedded in the casing 1, whereby the switch is turned off.

It is possible for the bone conduction loudspeaker 4 to be slidably mounted on the casing 1 so as to be movable in a longitudinal direction of the casing 1. It is also possible for the bone conduction loudspeaker 4 to be mounted on the casing 1 so as to perform a spherical motion (see Fig. 3).

In the case where the bone conduction loudspeaker 4 is slidably moved, it is necessary to form a slit in a mounting surface of the speech receiving opening 3, in which mounting surface the bone conduction loudspeaker 4 is mounted. The bone conduction loudspeaker 4 is provided with a neck-shaped support portion 13. This support portion 13 is provided with a narrow waist portion, which is capable of passing through the slit of the mounting surface in the opening 3 and therefore capable of slidably moving along this slit. Further, in the case where the spherical motion is wanted to be realized, it is necessary to form an engaging hole in the mounting surface of the speech receiving opening 3 for mounting the bone conduction loudspeaker 4 therein, in which engaging hole the neck-shaped support portion 13 of the bone conduction loudspeaker 4 is so engaged as to be rocked relative to the casing 1.

When the above-mentioned construction is employed, it is possible to adjust the telephone transmitter/receiver in length, and also capable of adjusting the bone conduction loudspeaker 4 in abutting angle of its surface through which the bone conduction loudspeaker 4 is brought into contact with the user's head portion. Through such adjustment in length and abutting angle, it is possible for the telephone transmitter/receiver of the present invention to be used in various types of telephone devices, which vary in size and shape of the mounting portion of the telephone transmitter/receiver.

### INDUSTRIAL APPLICABILITY

The present invention has a construction described above. Due to this, the telephone transmitter/receiver of the present invention is free from any feeling of physical disorder and is therefore capable of being used with the same sense as the conventional telephone transmitter/receiver. Further, it is also possible for the telephone transmitter/receiver of the present invention to be easily applied to the already-existing telephone device for enjoying bone conduction communication at a low cost. This is the effect of the present invention.

## Claims

1. A telephone transmitter/receiver comprising: a casing having a speech sending opening and a speech receiving opening; a microphone arranged in said speech sending opening; a bone conduction loudspeaker arranged in said speech receiving opening; an amplifier arranged in said casing and connected to said bone conduction loudspeaker; a connection cord having a telephone connector which can be inserted into a jack of a telephone main body and connected to both said microphone and said bone conduction loudspeaker; and, a power supply connection cord connecting said amplifier to an AC adapter.

2. The telephone transmitter/receiver as set forth in claim 1, wherein said power supply connection cord is provided with a DC jack which is capable of receiving a DC plug of said AC adapter therein in an insertion manner.

3. The telephone transmitter/receiver as set forth in claim 1, wherein said power supply connection cord is provided with said AC adapter in its front end.

4. The telephone transmitter/receiver as set forth in any one of claims 1 to 3, wherein said casing is provided with an on-off switch of a power source for energizing/de-energizing said amplifier.

5. The telephone transmitter/receiver as set forth in claim 4, wherein: a turn-on operation of said on-off switch is carried out by taking up said telephone transmitter/receiver from said telephone main body; and, a turn-off operation of said on-off switch is carried out by putting down said telephone transmitter/receiver onto said telephone main body.

6. The telephone transmitter/receiver as set forth in any one of claims 1 to 5, wherein saidbone conduction loudspeaker is arranged in said speech sending opening in a manner such that said bone conduction loudspeaker is exposed to the outside.

7. The telephone transmitter/receiver as set forth in claim 6, wherein said bone conduction loudspeaker is arranged in said speech sending opening in a manner such that saidbone conduction loudspeaker is capable of performing a spherical motion.

8. The telephone transmitter/receiver as set forth in claim 6 or 7, wherein said bone conduction loudspeaker is arranged in said speech sending opening in a manner such that said bone conduction loudspeaker is capable of moving in a longitudinal direction of said casing.
